# EUROPEAN PATENT APPLICATION

(11) **EP 4 604 602 A1**
(43) Date of publication of application: **20.08.2025**
(21) Application number: 23876607.5
(22) Date of filing: 08.10.2023
(51) Int. Cl.: H04W 24/10

(54) **TRANSMISSION METHODS, APPARATUS, COMMUNICATION DEVICE, AND READABLE STORAGE MEDIUM**

(30) Priority: 14.10.2022 CN 202211262707
(71) Applicant: Vivo Mobile Communication Co., Ltd., Dongguan, Guangdong 523863 (CN)
(72) Inventor: SHI, Yuan, Dongguan, Guangdong 523863 (CN)
(74) Representative: Conti, Marco
(86) International application number: PCT/CN2023/123324
(87) International publication number: WO 2024/078405

(57) **Abstract**

This application discloses a transmission method and apparatus, a communication device, and a readable storage medium, pertaining to the field of wireless communications technologies. The method includes: sending, by a terminal, a beam report, where the beam report includes beam quality information arranged in a preset order, and the preset order is related to beam positions.

## Description

### CROSS-REFERENCE TO RELATED APPLICATIONS

This application claims priority to Chinese Patent Application No. 202211262707.0, filed in China on October 14, 2022, which is incorporated herein by reference in its entirety.

### TECHNICAL FIELD

Embodiments of this application relate to the field of wireless communications technologies, and in particular, to a transmission method and apparatus, a communication device, and a readable storage medium.

### BACKGROUND

During beam measurement, a network configures a reference signal resource set (RS resource set), which includes at least one reference signal resource, such as a synchronization signal block (Synchronization Signal and PBCH block, SSB) resource (resource) or channel state information reference signal (Channel state information Reference Signal, CSI-RS) resource. A terminal performs measurement on layer 1 reference signal received power (Layer 1 reference signal received power, L1-RSRP)/layer 1 signal-to-noise and interference ratio (Layer 1 signal-to-noise and interference ratio, L1-SINR) of each reference signal (Reference Signal, RS) resource, and reports at least one optimal measurement result to the network, where the reported content includes an SSB resource indicator (SSB Resource Indicator, SSBRI) or CSI-RS resource indicator (CSI-RS Resource Indicator, CRI), and L1-RSRP/L1-SINR. The reported content reflects at least one optimal beam and its quality, so that the network determines a beam used for sending a channel or signal to the terminal.

Because the beam report needs to include a large number of beam positions such as SSBRI and CRI, which leads to relatively large beam reporting overheads, how to reduce beam report overheads while ensuring that the network side can correctly decode the beam report is an urgent problem to be resolved.

### SUMMARY

Embodiments of this application provide a transmission method and apparatus, a communication device, and a readable storage medium, so as to resolve the problem of relatively large beam reporting overheads.

According to a first aspect, a transmission method is provided, including:
sending, by a terminal, a beam report, where the beam report includes beam quality information arranged in a preset order, and the preset order is related to beam positions.

According to a second aspect, a transmission method is provided, including:
receiving, by a network-side device, a beam report, where the beam report includes beam quality information arranged in a preset order, and the preset order is related to beam positions.

According to a third aspect, a transmission apparatus is provided, including:
a first sending module, configured to send a beam report, where the beam report includes beam quality information arranged in a preset order, and the preset order is related to beam positions.

According to a fourth aspect, a transmission apparatus is provided, including:
a first receiving module, configured to receive a beam report, where the beam report includes beam quality information arranged in a preset order, and the preset order is related to beam positions.

According to a fifth aspect, a communication device is provided, where the communication device includes a processor, a memory, and a program or instructions stored in the memory and capable of running on the processor, and when the program or the instructions are executed by the processor, the steps of the method according to the first aspect or the second aspect are implemented.

According to a sixth aspect, a readable storage medium is provided, where a program or instructions are stored in the readable storage medium; and when the program or the instructions are executed by a processor, the steps of the method according to the first aspect or the second aspect are implemented.

According to a seventh aspect, a chip is provided, where the chip includes a processor and a communication interface, the communication interface is coupled to the processor, and the processor is configured to run a program or instructions to implement the steps of the method according to the first aspect or the second aspect.

According to an eighth aspect, a computer program/program product is provided, where the computer program/program product is stored in a non-transitory storage medium, and the program/program product is executed by at least one processor to implement the steps of the method according to the first aspect or the second aspect.

According to a ninth aspect, a communication system is provided, where the communication system includes a terminal and a network-side device, the terminal is configured to execute the steps of the method according to the first aspect; and the network-side device is configured to execute the steps of the method according to the second aspect.

In the embodiments of the application, the beam report includes beam quality information arranged in a preset order, and the preset order is related to beam positions, so that the beam report may carry no beam positions or fewer beam positions, thereby reducing beam reporting overheads and ensuring that the network side can correctly decode the beam report.

### BRIEF DESCRIPTION OF DRAWINGS

FIG. 1 is a schematic diagram of a neural network;
FIG. 2 is a schematic diagram of neurons;
FIG. 3 is a first schematic diagram of beam prediction based on an AI model;
FIG. 4 is a second schematic diagram of beam prediction based on an AI model;
FIG. 5 is a third schematic diagram of beam prediction based on an AI model;
FIG. 6 is a schematic architecture diagram of a wireless communication system according to an embodiment of this application;
FIG. 7 is a first flowchart of a transmission method according to an embodiment of this application;
FIG. 8 is a second flowchart of a transmission method according to an embodiment of this application;
FIG. 9 is a first schematic diagram of a transmission apparatus according to an embodiment of this application;
FIG. 10 is a second schematic diagram of a transmission apparatus according to an embodiment of this application;
FIG. 11 is a schematic diagram of a terminal according to an embodiment of this application;
FIG. 12 is a schematic diagram of a network-side device according to an embodiment of this application; and
FIG. 13 is a schematic diagram of a communication device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communication system.

To facilitate understanding of implementation of this application, the following technical points are introduced first.

### 1. Neural networks

Artificial intelligence is currently widely used in various fields. Artificial intelligence (Artificial Intelligence, AI) modules are implemented in a variety of manners, such as neural network, decision tree, support vector machine, and Bayesian classifier.

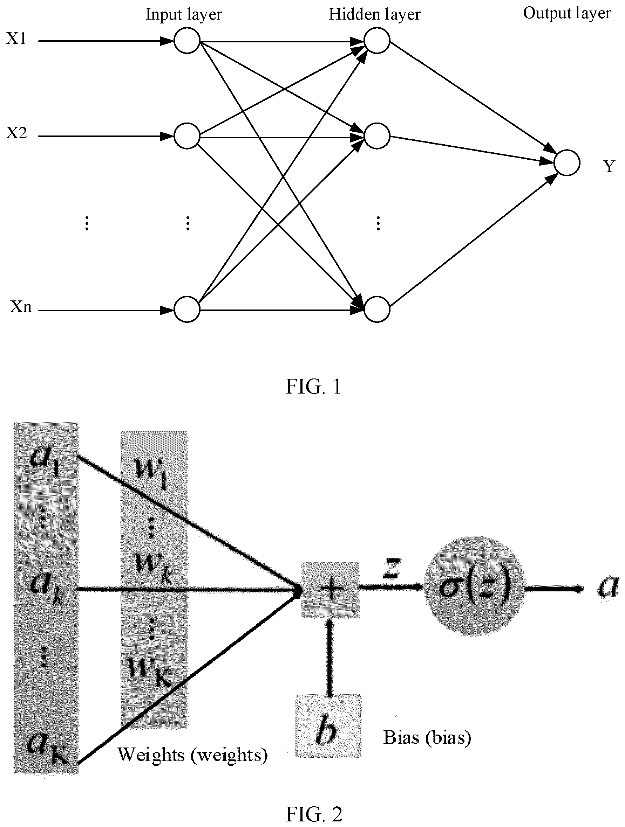

This application uses a neural network as an example for description, but does not limit specific types of AI modules. The structure of the neural network is shown in FIG. 1.

The neural network is composed of neurons. FIG. 2 illustrates a schematic diagram of neurons, where a₁, a₂, ..., a_{K} are inputs, w is a weight (a multiplicative coefficient), b is a bias (an additive coefficient), σ(z) is an activation function, and z=a₁w₁+...+aₖwₖ+...+ a_{K}w_{K}+b. Common activation functions include Sigmoid function, tanh function, rectified linear unit (Rectified Linear Unit, ReLU), and so on.

Parameters of the neural network may be optimized by using an optimization algorithm. The optimization algorithm may be a type of algorithm capable of minimizing or maximizing an objective function (also referred to as a loss function). The objective function is usually a mathematical combination of model parameters and data. For example, data X and its corresponding label Y are given to construct a neural network model f(.). With this model, a predicted output f(x) is obtained based on the input x, and a difference (f(x)-Y) between the predicted value and the real value can be calculated, which is the loss function. A suitable W,b found minimizes a value of the loss function, and a smaller loss value indicates that the model is closer to the real situation.

At present, the common optimization algorithms are basically based on the error back propagation (error Back Propagation, BP) algorithm. The basic idea of the BP algorithm is that a learning process includes two processes: forward propagation of signals and backward propagation of errors. In the forward propagation, input samples are transmitted from the input layer, processed layer by layer by each hidden layer, and then transmitted to the output layer. If an actual output of the output layer is not consistent with an expected output, it proceeds to the backward propagation stage of errors. Backward propagation of errors means that output errors are transmitted back to the input layer through the hidden layers layer by layer in a specific form, and the errors are distributed to all units of each layer, so as to obtain an error signal of each layer unit. The error signal is used as a basis for rectifying a weight of each unit. This process of adjusting the weight of each layer for forward propagation of signals and backward propagation of errors is performed repeatedly. The process of constantly adjusting weights is also the learning and training process of the network. This process continues until the errors of network outputs are reduced to an acceptable level, or until the preset number of learning times is reached.

### 2. Beam indication (beam indication) mechanism

After beam measurement and beam reporting, the network may perform beam indication for downlink and uplink channels or reference signals, so as to establish beam links between the network and the UE, thereby implementing channel or reference signal transmission.

With regard to beam indication for physical downlink control channel (Physical downlink control channel, PDCCH), the network configures K transmission configuration indication (Transmission Configuration Indication, TCI) states (state) for each control resource set (Control Resource Set, CORESET) by using radio resource control (Radio resource control, RRC) signaling. In a case that K > 1, one TCI state is indicated or activated by a media access control (Medium Access Control, MAC) control element (Control Element, CE); when K = 1, no additional MAC CE command is required. During PDCCH monitoring, the terminal uses the same quasi-colocation (Quasi-colocation, QCL) for all search spaces (search space) of a CORESET, that is, using the same TCI state for monitoring the PDCCH. A reference signal (Reference Signal, RS) (for example, a periodic channel state information reference signal resource (Channel State Information Reference Signal resource, CSI-RS resource), a semi-persistent CSI-RS resource, or a synchronization signal block (Synchronization Signal and PBCH block, SSB)) in the TCI state is spatially QCLed with a UE-specific (UE-specific) PDCCH demodulation reference signal (Demodulation Reference Signal, DMRS) port. The terminal may learn, based on the TCI state, which receive beam is used for receiving the PDCCH.

With regard to beam indication for PDSCH, the network configures M TCI states by using RRC signaling, activates 2N TCI states by using a MAC CE command, and then notifies the TCI states by using an N-bit (bit) TCI field (field) in downlink control information (Downlink Control Information, DCI). The reference signal in the TCI state is QCLed with a DMRS port of the physical downlink shared channel (Physical Downlink Shared Channel, PDSCH) to be scheduled. According to the TCI state, the UE may learn which receive beam is used for receiving the PDSCH.

With regard to beam indication for CSI-RS, when the CSI-RS type is periodic CSI-RS, the network configures QCL information for the CSI-RS resource by using RRC signaling. In a case that the CSI-RS type is semi-persistent CSI-RS, the network indicates its QCL information when activating one CSI-RS resource from an RRC-configured CSI-RS resource set (set) by using a MAC CE command. In a case that the CSI-RS type is aperiodic CSI-RS, the network configures QCL for a CSI-RS resource by using RRC signaling, and triggers the CSI-RS by using DCI.

With regard to beam indication for physical uplink control channel (Physical Uplink Control Channel, PUCCH), the network configures spatial relation information for each PUCCH resource by using the PUCCH-spatial relation information (Spatial Relation Information) parameter in RRC signaling. In a case that a plurality of pieces of spatial relation information are configured for a PUCCH resource, one piece of the spatial relation information is indicated or activated by using a MAC CE. In a case that only one piece of spatial relation information is configured for the PUCCH resource, no additional MAC CE command is required.

With regard to beam indication for PUSCH, spatial relation information of the PUSCH is indicated as follows: In a case that the PUSCH is scheduled by using DCI carried by the PDCCH, each SRI code point (code point) of a sounding reference signal resource indicator (Sounding Reference Signal resource indicator, SRI) field in the DCI indicates one SRI, and the SRI is used to indicate the spatial relation information of the PUSCH.

With regard to beam indication for sounding reference signal (Sounding Reference Signal, SRS), when an SRS type is periodic SRS, the network configures spatial relation information for an SRS resource by using RRC signaling. In a case that the SRS is semi-persistent SRS, the network activates, by using a MAC CE command, one of a group of spatial relation information configured by using RRC. In a case that an SRS type is aperiodic SRS, the network configures spatial relation information for an SRS resource by using RRC signaling.

To further improve the beam indication, a unified (unified) transmission configuration indicator (Transmission Configuration Indicator, TCI) state is proposed, which simply indicates beam information of subsequent reference signals and multiple channels through the TCI field in one DCI.

The beam information, spatial relation information, spatial domain transmission filter (spatial domain transmission filter) information, spatial filter (spatial filter) information, TCI state information, QCL information, QCL parameter, beam association relationship, and the like have approximately the same meaning.

Downlink beam information may be usually represented by TCI state information and QCL information. Uplink beam information may be usually represented by using spatial relation information.

### 3. Beam measurement and reporting (beam measurement and beam reporting)

Analog beamforming is based on full-bandwidth transmission, and an antenna element of each polarization direction on a panel of each high-frequency antenna array can transmit analog beams only in a time-division multiplexing manner. Beamforming weights of the analog beams are implemented by adjusting parameters of devices such as a phase shifter on the radio frequency front-end.

At present, in the academia and industrial fields, a polling manner is usually used for training of analog beamforming vectors, that is, the array element of each polarization direction of each antenna panel sends a training signal (that is, a candidate beamforming vector) sequentially at agreed times in a time-division multiplexing manner. A terminal feeds back a beam report after measurement, so that the network side can use the training signal to implement analog beam transmission for transmitting a next service. The content of the beam report generally includes identifiers of several optimal transmit beams and a measured received power of each transmit beam.

The number of beam reports is determined based on a parameter configured for the terminal by the network. The number of RSs and the number of RSRPs to be included in the beam report of the terminal are configured based on an RRC-configured parameter. Values of the configured quantities are 1, 2, 3, and 4, and a default value is 1. In addition, the quantities limited are based on the terminal capability, and the terminal may first report the maximum quantity being supported.

In a case that only one L1-RSRP is included in the beam report of the terminal, a 7-bit (bit) quantization method is used, with a quantization step of 1dB and a quantization range of -140dBm to -44dBm. In a case that the indicated beam report of the terminal includes a plurality of L1-RSRPs or a group-based beam report (group based beam report) is enabled, the strongest RSRP is quantized through 7-bit quantization, and remaining RSRPs are quantized by using a 4-bit differential quantization method with a quantization step of 2dB.

### 4. Beam prediction by using an AI method

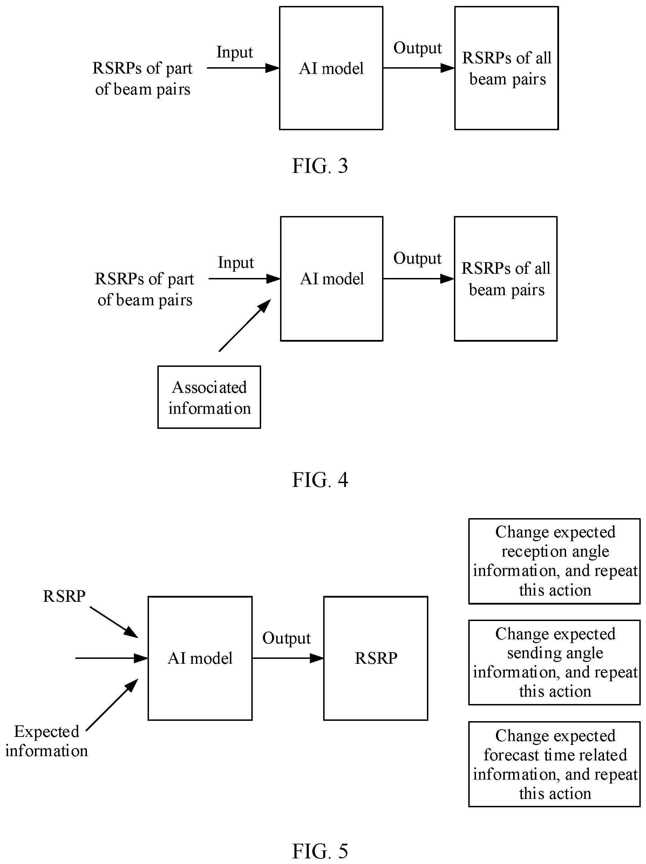

One possible manner is shown in FIG. 3. RSRPs of part of beam pairs are used as inputs, and outputs of an AI model are RSRP results of all beam pairs. The beam pair includes a transmit beam and a receive beam. Then the number of inputs of the AI model is the number of selected beam pairs, and the number of outputs is the number of all beam pairs.

In addition, there is an enhanced beam prediction performance method, as shown in FIG. 4.

On the input side, associated information is added, and the associated information is generally angle associated information, beam ID information, and the like that are corresponding to selected beam pairs and used as inputs. Therefore, the number of inputs of such model is still related to the number of selected beam pairs, and the number of outputs is still equal to the number of all beam pairs.

There is also an improved method based on the above, as shown in FIG. 5.

It mainly changes expected information through the AI model to affect the outputs of the AI model.

Input types of the AI model include at least one of the following:
(1) beam quality related information;
(2) beam information;
(3) end A sends beam information;
(4) end B receives the beam information;
(5) beam information expected by end B;
(6) end B receiving the beam information as expected by end B;
(7) end A sending the beam information as expected by end B;
(8) time-related information related to beam quality; and
(9) expected predicted time-related information.

The beam quality information in this specification includes but is not limited to at least one of the following types: L1-SINR, L1-RSRP, layer 1 reference signal received quality (Reference Signal Received Quality, L1-RSRQ), layer 3 signal-to-noise and interference ratio (Layer 3 signal-to-noise and interference ratio, L3-SINR), layer 3 reference signal received power (Layer 3 reference signal received power, L3-RSRP), layer 3 reference signal received quality (Reference Signal Received Quality, L3-RSRQ), and the like.

In this specification, beam information is associated information corresponding to the beam quality information included in the beam report. The associated information includes but is not limited to at least one of the following: beam identity (Identity, ID) information, beam angle information, beam gain information, beam width information, expected information, and the like.

The beam ID information is used to indicate related information of an identity of the beam, including but not limited to at least one of the following: a transmit beam ID, a receive beam ID, a beam ID, a reference signal set (set) ID corresponding to the beam, a reference signal resource ID corresponding to the beam, a random ID for unique identification, a code value after additional AI network processing, beam angle information, resource index information, CRI, SSBRI, and the like.

The beam angle information is used to indicate angle information corresponding to the beam, including but not limited to at least one of the following: angle related information, transmit angle related information, and receive angle related information.

The angle information is related information used to indicate an angle or identity, such as an angle, a radian, an index code value, an ID value, a code value after additional AI network processing, and the like.

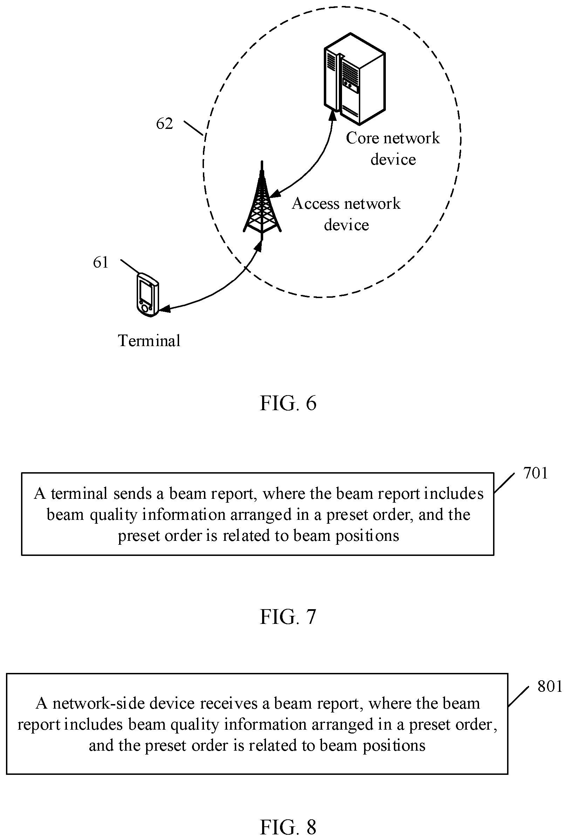

FIG. 6 is a block diagram of a wireless communication system to which the embodiments of this application are applicable. The wireless communication system includes a terminal 61 and a network-side device 62. The wireless communication system may be a communication system with a wireless AI function, such as 5G-Advanced (5G-Advanced) or 6G.

The terminal 61 may be a terminal-side device such as a mobile phone, a tablet computer (Tablet Personal Computer), a laptop computer (Laptop Computer) or referred to as a notebook computer, a personal digital assistant (personal digital assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home device (a home device with wireless communication function, such as a refrigerator, a television, a washing machine, or a furniture), a game console, a personal computer (personal computer, PC), a teller machine, a self-service machine, or the like. The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, and the like. In addition to the foregoing terminal device, the terminal involved in this application may alternatively be a chip in a terminal, such as a modem (Modem) chip or a system on chip (System on Chip, SoC). It should be noted that a specific type of the terminal 61 is not limited in the embodiments of this application.

The network-side device 62 may include an access network device or a core network device, where the access network device may also be referred to as a radio access network device, a radio access network (Radio Access Network, RAN), a radio access network function, or a radio access network unit. The access network device may include a base station, a wireless local area network (Wireless Local Area Network, WLAN) access point, a wireless fidelity (Wireless Fidelity, Wi-Fi) node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that, in the embodiments of this application, a core network device in an NR system is used as an example for description, and a specific type of the core network device is not limited.

The following specifically describes in detail a transmission method and apparatus, a communication device, and a readable storage medium provided in the embodiments of this application through some embodiments and application scenarios thereof with reference to the accompanying drawings.

Referring to FIG. 7, an embodiment of this application provides a transmission method, applied to a terminal and including the following specific steps.

Step 701: The terminal sends a beam report, where the beam report includes beam quality information arranged in a preset order, and the preset order is related to beam positions.

The beam report in this application may also be referred to as a feedback report, and the beam report may be used for at least one of AI model training, AI model performance verification, AI model adjustment, and AI model inference.

The beam report includes beam quality information arranged in the preset order. The preset order being related to the beam positions can be understood as that the network side can correctly decode the beam report based on the preset order of the beam quality information in a case that the beam report carries no beam positions or fewer beam positions.

In an implementation of this application, a sending manner of the beam report includes one of the following manners 1 to 4:

### Manner 1:

In a case that the beam report includes beam quality information of all beam positions, the beam report includes no beam positions, for example, the beam positions may be SSBRI, CRI, and the like.

In this specification, the beam quality information of all the beam positions (or all beam quality information that needs to be fed back) can be understood as all beam measurement results corresponding to all beam resources sent by the network side.

For example, the network side configures 16 beam resources, corresponding to beam resource 1, beam resource 2, ..., and beam resource 16; and the terminal obtains, through measurement, 16 RSRPs, namely RSRP1, RSRP2, ..., and RSRP16. The order of the beam quality information in the beam report sent by the terminal is RSRP1, RSRP2, RSRP3, RSRP4, ..., and RSRP16, that is, the beam quality information is arranged in an order of beam resource identifiers. After receiving the beam report, the network may learn that the 1st RSRP in the beam report corresponds to an RSRP of beam resource 1, and so on.

### Manner 2:

In a case that the beam report includes beam quality information of part of beam positions, the beam report further includes first position indication information indicating a first position, where the first position is a position whose beam quality information does not need to be fed back in the beam report.

For example, the first position indication information may be SSBRI, CRI, or the like.

In an implementation of this application, the first position indication information meets at least one of the following:
(1) the number of pieces of first position indication information is equal to the number of pieces of or a sum of the number of pieces of beam quality information that does not need to be fed back in the beam quality information of all the beam positions associated with the beam report; and
(2) the number of bits occupied by the first position indication information is determined based on the number of pieces of beam quality information of all the beam positions associated with the beam report.

In an implementation of this application, the number of bits occupied by the first position indication information being determined based on the number of pieces of beam quality information of all the beam positions associated with the beam report includes one of the following:
(1) the number of bits occupied by the first position indication information is equal to rounding up (log₂(the number of pieces of beam quality information of all the beam positions associated with the beam report)); and
(2) the number of bits occupied by the first position indication information is equal to rounding up (log₂(the number of pieces of beam quality information of all the beam positions associated with the beam report - the number of indicated beam quality information that does not need to be fed back)).

It can be understood as: overheads of one piece of first position indication information in the beam report are determined based on the number of pieces of beam quality information of all the beam positions associated with the beam report and the number of pieces of beam quality information that does not need to be fed back in the beam report and that is determined based on position indication information located before the first position indication information.

In an implementation of this application, the method further includes:
obtaining, by the terminal, a manner of determining the number of bits occupied by the first position indication information, in at least one of the following manners: being specified by a protocol, being configured by a network side, being reported by the terminal, and being negotiated between the terminal and the network side.

Optionally, in a case that the number of bits corresponding to the number of pieces of beam quality information of all the beam positions associated with the beam report is greater than or equal to the number of quantized bits or differentially quantized bits of beam quality information, the beam report includes the beam quality information of all the beam positions, and the beam report does not include the first position indication information.

Optionally, the beam report further includes first information, where the first information indicates a manner of determining the number of bits occupied by the first position indication information.

Optionally, in a case that the beam report includes a plurality of pieces of first position indication information, encoding positions of the plurality of pieces of first position indication information are adjacent in the beam report.

Optionally, encoding positions of the first position indication information in the beam report are located before encoding positions of beam quality information, for example, first position indication information 1, first position indication information 2, beam quality information 1, beam quality information 2, beam quality information 3, and beam quality information 4.

For example, the network side configures 16 beam resources, corresponding to beam resource 1, beam resource 2, ..., and beam resource 16; and the terminal obtains, through measurement, 16 RSRPs, namely RSRP 1, RSRP 2, ..., and RSRP16, in which RSRP1, RSRP2, and RSRP 5 are not fed back. In this case, the beam report sent by the terminal includes three pieces of first position indication information, respectively indicating that RSRP1, RSRP2, and RSRP5 are not fed back, and an order of feeding back other RSRPs is consistent with a corresponding order of beam resources, that is, an order of beam quality information in the beam report is RSRP3, RSRP4, RSRP6, RSRP7, ..., and RSRP16. After receiving the beam report, the network may learn according to the first position indication information that the 1st RSRP in the beam report corresponds to an RSRP of beam resource 3, and so on.

### Manner 3:

In a case that the beam report includes beam quality information of part of beam positions, the beam report further includes second position indication information indicating a second position and type indication information indicating a type of the second position, where the type indication information is used to indicate that the second position is a position whose beam quality information does not need to be fed back, or the type indication information is used to indicate that the second position is a position whose beam quality information needs to be fed back.

For example, the second position indication information may be SSBRI, CRI, or the like.

In an implementation of this application, in a case that the type indication information is used to indicate that the second position is a position whose beam quality information does not need to be fed back, the second position indication information meets at least one of the following:
(1) The number of pieces of second position indication information is equal to the number of pieces of beam quality information that does not need to be fed back in the beam quality information of all the beam positions associated with the beam report.
(2) The number of pieces of second position indication information is equal to a sum of the number of pieces of beam quality information that does not need to be fed back in beam quality information of all beam positions that are corresponding to all feedback moments included in the beam report and that are associated with the beam report.
   For example, the beam report includes two feedback moments. Beam quality information of four beam positions is not fed back at the 1st feedback moment, and beam quality information of two beam positions is not fed back at the 2nd feedback moment. In this case, the number of pieces of second position indication information should be 6.
(3) The number of bits occupied by the second position indication information is determined based on the number of pieces of beam quality information of all the beam positions associated with the beam report.

Optionally, the number of bits occupied by the second position indication information being determined based on the number of pieces of beam quality information of all the beam positions associated with the beam report includes one of the following:
(1) the number of bits occupied by the second position indication information is equal to rounding up (log₂(the number of pieces of beam quality information of all the beam positions associated with the beam report)); and
(2) that the number of bits occupied by the second position indication information is equal to rounding up (log₂(the number of pieces of beam quality information of all the beam positions associated with the beam report - the number of indicated beam quality information that does not need to be fed back)) can be understood as: overheads of one piece of second position indication information in the beam report are determined based on the number of pieces of beam quality information of all the beam positions associated with the beam report and the number of pieces of beam quality information that does not need to be fed back in the beam report and that is determined based on the position indication information located before the second position indication information.

In an implementation of this application, in a case that the type indication information is used to indicate that the second position is a position whose beam quality information needs to be fed back, the second position indication information meets at least one of the following:
(1) the number of pieces of second position indication information is equal to the number of pieces of or a sum of the number of pieces of beam quality information that needs to be fed back in the beam quality information of all the beam positions associated with the beam report;
(2) the number of bits occupied by the second position indication information is determined based on the number or a sum of the number of enabled beam positions in all the beam positions associated with the beam report; and
(3) The number of bits occupied by the second position indication information is determined based on the number of pieces of beam quality information of all the beam positions associated with the beam report.

In an implementation of this application, the number of bits occupied by the second position indication information being determined based on the number of pieces of beam quality information of all the beam positions associated with the beam report includes one of the following:
(1) the number of bits occupied by the second position indication information is equal to rounding up (log₂(the number of pieces of beam quality information of all the beam positions associated with the beam report)); and
(2) that the number of bits occupied by the second position indication information is equal to rounding up (log₂(the number of pieces of beam quality information of all the beam positions associated with the beam report - the number of indicated beam quality information that needs to be fed back)) can be understood as: overheads of one piece of second position indication information in the beam report are determined based on the number of pieces of beam quality information of all the beam positions associated with the beam report and the number of pieces of beam quality information that needs to be fed back and that is determined based on the position indication information located before the second position indication information in the beam report.

In an implementation of this application, the method further includes:
obtaining, by the terminal, a manner of determining the number of bits occupied by the second position indication information, in at least one of the following manners: being specified by a protocol, being configured by a network side, being reported by the terminal, and being negotiated between the terminal and the network side.

In an implementation of this application, the beam report further includes:
first information, where the first information indicates a method of determining the number of bits occupied by the second position indication information.

In an implementation of this application, in a case that the beam report includes a plurality of pieces of second position indication information, encoding positions of the plurality of pieces of second position indication information are adjacent in the beam report.

In an implementation of this application, encoding positions of the second position indication information in the beam report are before encoding positions of the beam quality information, for example, second position indication information 1, second position indication information 2, beam quality information 1, beam quality information 2, beam quality information 3, and beam quality information 4.

### Manner 4:

In a case that the beam report includes beam quality information of part of beam positions, the beam report further includes third position indication information indicating part of beam positions, where the third position indication information is a bitmap, and a bit order of the bitmap is consistent with at least one of the following: reference signal resource set, reference signal resource, and beam information pattern; where the reference signal resource set and the reference signal resource are resources that are associated with the beam report and used for beam measurement, and the beam information pattern is used for determining a beam position that is associated with the beam report and used for beam measurement.

In an implementation of this application, the number of bits occupied by the bitmap is determined based on the number of pieces of beam quality information of all beam positions associated with the beam report.

For example, "1" in the bitmap means that beam quality information of a corresponding position needs to be fed back, and "0" in the bitmap means that beam quality information of a corresponding position does not need to be fed back.

In an implementation of this application, beam quality information of all the beam positions included in or associated with the beam report is determined based on a reference signal resource set and/or reference signal resource that is associated with the beam report and used for beam measurement; or the beam quality information of all the beam positions included in or associated with the beam report is determined based on a pre-configured beam position resource pool, for example, one beam position resource set configured by the network side. The network side selects part of beam position resources from the beam position resource set and associates them with one beam report, and the terminal performs beam measurement, where beam quality information corresponding to the selected part of beam position resources is fed back in the beam report.

In an implementation of this application, the reference signal resource set and/or reference signal resource is associated with or is configured to be repetition off (repetition off) or repetition on (repetition on).

In an implementation of this application, the number of pieces of beam quality information of all the beam positions included in or associated with the beam report is determined based on a reference signal resource set and/or reference signal resource that is associated with the beam report and used for beam measurement; or
the number of pieces of beam quality information of all the beam positions included in or associated with the beam report is determined based on the number of beam position resources that are associated with the beam report and used for beam measurement.

In an implementation of this application, the manner of determining the preset order of the beam quality information includes a determining manner 1 and a determining manner 2.

### (A) Determining manner 1:

In an implementation of this application, the preset order of the beam quality information is consistent with an order of reference signal resource sets and/or reference signal resources associated with and/or enabled in configuration information of the beam report, and the reference signal resource set and/or reference signal resource is used for obtaining beam quality information of all the beam positions included in or associated with the beam report.

In an implementation of this application, the order of the reference signal resource sets or reference signal resources is determined based on a first order; where
the first order includes at least one of the following:
(1) an identifier ID order of the reference signal resource sets;
(2) a beam ID order associated with the reference signal resource sets;
(3) a beam index order associated with the reference signal resource sets;
(4) a beam angle order associated with the reference signal resource sets;
(5) an ID order of the reference signal resources;
(6) a beam ID order associated with the reference signal resources;
(7) a beam index order associated with the reference signal resources;
(8) a beam angle order associated with the reference signal resources;
(9) a position order of the reference signal resource sets in the configuration information of the beam report;
(10) a position order of the reference signal resources in the configuration information of the beam report;
(11) a sending and/or reception time order of the reference signal resources; and
(12) a priority order of reference signals.

For example, both an SSB and a CSI-RS are associated; beam quality information determined based on the SSB is preferentially fed back in the beam report, and then beam quality information corresponding to the CSI-RS is determined.

In an implementation of this application, in a case that the first order includes a plurality of different orders, priorities of the different orders in the first order are determined in at least one of the following manners: being specified by a protocol, being configured by the network side, being reported by the terminal, and being negotiated between the terminal and the network side.

For example, in a case of being determined based on a position order of resource sets and a position order of resources, determining is first performed based on the position order of resource sets, and then determining is performed based on a position order of resources in the resource set.

Optionally, the ID order, index order, and angle order include one of the following: an ascending order and a descending order. Optionally, the time order and the position order include one of the following: from front to back, and from back to front.

### (B) Determining manner 2:

In an implementation of this application, the preset order of the beam quality information is consistent with an order of beam information patterns.

In an implementation of this application, the order of beam information patterns is determined in at least one of the following manners: being specified by a protocol, being configured by the network side, being reported by the terminal, and being negotiated between the terminal and the network side.

In an embodiment of this application, the beam report further includes or is associated with an index of a beam information pattern selected by the terminal. For example, the order of beam information patterns is determined based on both network configuration and terminal reporting. The network configures a plurality of beam information patterns in advance, and the terminal selects an appropriate beam information pattern, and makes the beam report include or associated with an index of the beam information pattern.

In an implementation of this application, the beam report further includes the number of pieces of beam quality information that needs to be fed back.

In an implementation of this application, the beam report further includes second information, and the second information is used to indicate the number of pieces of beam quality information and/or the number of beam positions in the beam report.

In an implementation of this application, configuration information of the beam report or the beam report further includes third information, and the third information is used to indicate the number of periods of the beam quality information comprised in the beam report or the number of moments of the beam quality information included in the beam report.

In an implementation of this application, the number of second information is the same as the number of periods or moments indicated by the third information.

In an implementation of this application, beam quality information of all beam positions associated with the beam report or the number of pieces of beam quality information that needs to be fed back is determined based on the beam information pattern reported in or associated with the beam report.

In an implementation of this application, the number of pieces of beam quality information that needs to be fed back is determined based on the number of panels (panels) simultaneously received by the terminal, or based on the number of beams simultaneously received by the terminal, or based on the number of beam groups, and the number of beam groups is determined by a group beam reporting function.

In an implementation of this application, the number of pieces of beam quality information that needs to be fed back is equal to a product of the number of pieces of beam quality information that needs to be fed back and corresponds to a single panel and the number of panels simultaneously received, or the number of pieces of beam quality information that needs to be fed back is equal to a product of the number of pieces of beam quality information that needs to be fed back and corresponds to a single receive beam and the number of receive beams simultaneously received.

In an implementation of this application, the preset order of the beam quality information is determined based on a panel feedback manner or a beam feedback manner.

In an implementation of this application, the panel feedback manner includes at least one of multi-panel priority and single-panel priority, or the beam feedback manner includes at least one of multi-beam priority and single-beam priority.

For example, 2 panels are received simultaneously, and multi-panel priority is used. An encoding order of the beam report is RSPP1-panel1, RSRP1-panel2, RSRP2-panel1, RSRP2-panel2, ..., and so on.

For example, 2 panels are received simultaneously, and single-panel priority is used, that is, RSPP1-panel1, RSPP2-panel1, ..., RSRP1-panel2, and RSRP2-panel2.

In an implementation of this application, in a case that the beam quality information uses a differential quantization method, reference beam quality information in the differential quantization method is determined in at least one of the following manners: being specified by a protocol, being configured by a network side, being reported by the terminal, and being negotiated between the terminal and the network side. For example, the reference beam quality information may be a maximum value of the beam quality information in the beam report.

In an implementation of this application, in a case that reference beam quality information is included in beam quality information of all beam positions included in or associated with the beam report, the beam report includes or is associated with reference beam information position indication information, where the reference beam information position indication information is used to indicate a position of the reference beam quality information in the beam quality information of all the beam positions associated with the beam report.

In an implementation of this application, the reference beam information position indication information meets at least one of the following:
(1) the number of bits occupied by the reference beam information position indication information is determined based on the number of pieces of beam quality information of all the beam positions associated with the beam report;
   for example, the number of bits occupied by the reference beam information position indication information is equal to rounding up (log₂(the number of pieces of beam quality information of all the beam positions associated with the beam report)), or a bitmap (bitmap) of equal length; and
(2) the reference beam information position indication information is located before a position of the beam quality information in the beam report.

For example, the network side preferentially decodes the reference beam quality information based on the reference beam position indication information, and then decodes, based on the reference beam quality information, the beam quality information included in the beam report.

In an implementation of this application, in a case that the reference beam quality information is not included in the beam quality information of all the beam positions associated with the beam report, a position of the reference beam quality information in the beam report is determined in at least one of the following manners: being specified by the protocol, being configured by the network side, being reported by the terminal, and being negotiated between the terminal and the network side. For example, the protocol specifies that the reference beam quality information is located at the very front, the very end, or a specific position in a feedback area of the beam report.

In an implementation of this application, the beam position includes at least one of the following:
(1) a beam resource identifier;
(2) a beam index;
(3) a beam resource index;
(4) a beam resource time-domain position;
(5) a beam time-domain position; and
(6) a beam angle.

In an implementation of this application, a sending manner of the beam report is determined in at least one of the following manners: being specified by the protocol, being configured by the network side, being reported by the terminal, and being negotiated between the terminal and the network side.

In an implementation of this application, the beam report includes sending indication information, and the sending indication information is used to indicate a sending manner of the beam report.

In an implementation of this application, the number of bits occupied by the sending indication information is determined based on the number of preset sending manners of the beam report, and the number of preset sending manners is determined in at least one of the following manners: being specified by the protocol, being configured by the network side, being reported by the terminal, and being negotiated between the terminal and the network side.

In an implementation of this application, the sending indication information includes type indication information. For example, the sending indication information is 2 bits, separately used to indicate manner 4 as well as a case of the second position indication information being used to indicate the beam indication information to be fed back in manner 1, manner 2, and manner 3.

In the embodiments of the application, the beam report includes beam quality information arranged in a preset order, and the preset order is related to beam positions, so that the beam report may carry no beam positions or fewer beam positions, thereby reducing beam reporting overheads and ensuring that the network side can correctly decode the beam report.

Referring to FIG. 8, an embodiment of this application provides a transmission method, applied to a network-side device and includes the following steps.

Step 801: The network-side device receives a beam report, where the beam report includes beam quality information arranged in a preset order, and the preset order is related to beam positions.

In an implementation of this application, in a case that the beam report includes beam quality information of all beam positions associated with the beam report, the beam report does not include beam positions;
or,
in a case that the beam report includes beam quality information of part of beam positions, the beam report further includes first position indication information indicating a first position, where the first position is a position whose beam quality information does not need to be fed back in the beam report;
   or,
in a case that the beam report includes beam quality information of part of beam positions, the beam report further includes second position indication information indicating a second position and type indication information indicating a type of the second position, where the type indication information is used to indicate that the second position is a position whose beam quality information does not need to be fed back, or the type indication information is used to indicate that the second position is a position whose beam quality information needs to be fed back;
   or,
in a case that the beam report includes beam quality information of part of beam positions, the beam report further includes third position indication information indicating part of beam positions, where the third position indication information is a bitmap, and a bit order of the bitmap is consistent with at least one of the following: reference signal resource set, reference signal resource, and beam information pattern; where the reference signal resource set and the reference signal resource are resources that are associated with the beam report and used for beam measurement, and the beam information pattern is used for determining a beam position that is associated with the beam report and used for beam measurement.

In an implementation of this application, the method further includes:
determining, by the network-side device according to the first position indication information or the second position indication information, the beam quality information that does not need to be fed back as a default value.

Optionally, the default value is determined in a manner such as protocol specification, AI model capability reporting by the terminal, AI model capability interaction by the network, or the like. For example, in the manner of AI model capability interaction, it is determined that the default value is equal to an upper limit value or a lower limit value in model capability interaction values. For example, in the manner of protocol specification, the default value is a lower limit of a quantization range of beam quality information or a lower limit of a quantization range of reference beam quality information.

In an implementation of this application, the beam position includes at least one of the following:
(1) a beam resource identifier;
(2) a beam index;
(3) a beam resource index;
(4) a beam resource time-domain position;
(5) a beam time-domain position; and
(6) a beam angle.

In an implementation of this application, the first position indication information meets at least one of the following:
(1) the number of pieces of first position indication information is equal to the number of pieces of or a sum of the number of pieces of beam quality information that does not need to be fed back in the beam quality information of all the beam positions associated with the beam report;
(2) the number of bits occupied by the first position indication information is determined based on the number of pieces of beam quality information of all the beam positions associated with the beam report.

In an implementation of this application, in a case that the number of bits corresponding to the number of pieces of beam quality information of all the beam positions associated with the beam report is greater than or equal to the number of quantized bits or differentially quantized bits of beam quality information, the beam report includes the beam quality information of all the beam positions, and the beam report does not include the first position indication information.

In an implementation of this application, in a case that the type indication information is used to indicate that the second position is a position whose beam quality information does not need to be fed back, the second position indication information meets at least one of the following:
(1) The number of pieces of second position indication information is equal to the number of pieces of beam quality information that does not need to be fed back in the beam quality information of all the beam positions associated with the beam report.
(2) The number of pieces of second position indication information is equal to a sum of the number of pieces of beam quality information that does not need to be fed back in beam quality information of all beam positions that are corresponding to all feedback moments included in the beam report and that are associated with the beam report.

For example, the beam report includes two feedback moments. Beam quality information of four beam positions is not fed back at the 1st feedback moment, and beam quality information of two beam positions is not fed back at the 2nd feedback moment. In this case, the number of pieces of second position indication information should be 6.

(2) The number of bits occupied by the second position indication information is determined based on the number of pieces of beam quality information of all the beam positions associated with the beam report.

In an implementation of this application, the number of bits occupied by the first position indication information or the second position indication information is determined in one of the following manners:
(1) the number of bits occupied by the first position indication information or the second position indication information is equal to rounding up (log₂(the number of pieces of beam quality information of all the beam positions associated with the beam report)); and
(2) the number of bits occupied by the first position indication information or the second position indication information is equal to rounding up (log₂(the number of pieces of beam quality information of all the beam positions associated with the beam report - the number of indicated beam quality information that does not need to be fed back)).

In an implementation of this application, in a case that the type indication information is used to indicate that the second position is a position whose beam quality information needs to be fed back, the second position indication information meets at least one of the following:
(1) the number of pieces of second position indication information is equal to the number of pieces of or a sum of the number of pieces of beam quality information that needs to be fed back in the beam quality information of all the beam positions associated with the beam report;
(2) the number of bits occupied by the second position indication information is determined based on the number or a sum of the number of enabled beam positions in all the beam positions; and
(3) The number of bits occupied by the second position indication information is determined based on the number of pieces of beam quality information of all the beam positions associated with the beam report.

In an implementation of this application, the number of bits occupied by the second position indication information being determined based on the number of pieces of beam quality information of all the beam positions associated with the beam report includes one of the following:
(1) the number of bits occupied by the second position indication information is equal to rounding up (log₂(the number of pieces of beam quality information of all the beam positions associated with the beam report)); and
(2) the number of bits occupied by the second position indication information is equal to rounding up (log₂(the number of pieces of beam quality information of all the beam positions associated with the beam report - the number of indicated beam quality information that needs to be fed back)).

In an implementation of this application, the beam report further includes:
first information, where the first information indicates a manner of determining the number of bits occupied by the first position indication information or the second position indication information.

In an implementation of this application, in a case that the beam report includes a plurality of pieces of first position indication information or a plurality of pieces of second position indication information, encoding positions of the plurality of pieces of first position indication information or second position indication information are adjacent in the beam report.

In an implementation of this application, an encoding position of the first position indication information or the second position indication information in the beam report is before an encoding position of beam quality information,

In an implementation of this application, the number of bits occupied by the bitmap is determined based on the number of pieces of beam quality information of all beam positions associated with the beam report.

In an implementation of this application, beam quality information of all beam positions included in or associated with the beam report is determined based on a reference signal resource set and/or reference signal resource that is associated with the beam report and used for beam measurement; or the beam quality information of all the beam positions included in or associated with the beam report is determined based on a pre-configured beam position resource pool.

In an implementation of this application, the number of pieces of beam quality information of all the beam positions included in or associated with the beam report is determined based on a reference signal resource set and/or reference signal resource that is associated with the beam report and used for beam measurement; or
the number of pieces of beam quality information of all the beam positions included in or associated with the beam report is determined based on the number of beam position resources that are associated with the beam report and used for beam measurement.

In an implementation of this application, the preset order of the beam quality information is consistent with an order of reference signal resource sets and/or reference signal resources associated with and/or enabled in configuration information of the beam report, and the reference signal resource set and/or reference signal resource is used for obtaining beam quality information of all the beam positions included in or associated with the beam report.

In an implementation of this application, the order of the reference signal resource sets or reference signal resources is determined based on a first order; where
the first order includes at least one of the following:
(1) an identifier ID order of the reference signal resource sets;
(2) a beam ID order associated with the reference signal resource sets;
(3) a beam index order associated with the reference signal resource sets;
(4) a beam angle order associated with the reference signal resource sets;
(5) an ID order of the reference signal resources;
(6) a beam ID order associated with the reference signal resources;
(7) a beam index order associated with the reference signal resources;
(8) a beam angle order associated with the reference signal resources;
(9) a position order of the reference signal resource sets in the configuration information of the beam report;
(10) a position order of the reference signal resources in the configuration information of the beam report;
(11) a sending and/or reception time order of the reference signal resources; and
(12) a priority order of reference signals.

In an implementation of this application, the preset order of the beam quality information is consistent with an order of beam information patterns.

In an implementation of this application, the beam report further includes or is associated with an index of the beam information pattern selected by the terminal, and/or the beam report further includes the number of pieces of beam quality information that needs to be fed back.

In an implementation of this application, the beam report further includes second information, and the second information is used to indicate the number of pieces of beam quality information and/or the number of beam positions in the beam report.

In an implementation of this application, configuration information of the beam report or the beam report further includes third information, and the third information is used to indicate the number of periods of the beam quality information comprised in the beam report or the number of moments of the beam quality information included in the beam report.

In an implementation of this application, the number of second information is the same as the number of periods or moments indicated by the third information.

In an implementation of this application, beam quality information of all beam positions associated with the beam report or the number of pieces of beam quality information that needs to be fed back is determined based on the beam information pattern reported in or associated with the beam report.

In an implementation of this application, the number of pieces of beam quality information that needs to be fed back is determined based on the number of panels (panels) simultaneously received by the terminal, or based on the number of beams simultaneously received by the terminal, or based on the number of beam groups, and the number of beam groups is determined by a group beam reporting function.

In an implementation of this application, the number of pieces of beam quality information that needs to be fed back is equal to a product of the number of pieces of beam quality information that needs to be fed back and corresponds to a single panel and the number of panels simultaneously received, or the number of pieces of beam quality information that needs to be fed back is equal to a product of the number of pieces of beam quality information that needs to be fed back and corresponds to a single receive beam and the number of receive beams simultaneously received.

In an implementation of this application, the preset order of the beam quality information is determined based on a panel feedback manner or a beam feedback manner.

In an implementation of this application, the panel feedback manner includes at least one of multi-panel priority and single-panel priority, or the beam feedback manner includes at least one of multi-beam priority and single-beam priority.

In an implementation of this application, in a case that the beam quality information uses a differential quantization method, reference beam quality information in the differential quantization method is determined in at least one of the following manners: being specified by a protocol, being configured by a network side, being reported by the terminal, and being negotiated between the terminal and the network side.

In an implementation of this application, in a case that reference beam quality information is included in beam quality information of all beam positions included in or associated with the beam report, the beam report includes or is associated with reference beam information position indication information, where the reference beam information position indication information is used to indicate a position of the reference beam quality information in the beam quality information of all the beam positions associated with the beam report.

In an implementation of this application, the reference beam information position indication information meets at least one of the following:
(1) the number of bits occupied by the reference beam information position indication information is determined based on the number of pieces of beam quality information of all the beam positions associated with the beam report;
(2) the reference beam information position indication information is located before a position of the beam quality information in the beam report.

In an implementation of this application, in a case that the reference beam quality information is not included in the beam quality information of all the beam positions associated with the beam report, a position of the reference beam quality information in the beam report is determined in at least one of the following manners: being specified by the protocol, being configured by the network side, being reported by the terminal, and being negotiated between the terminal and the network side.

In an implementation of this application, the reference beam quality information is located before a position of the beam quality information position in the beam report.

In the embodiments of the application, the beam report includes beam quality information arranged in a preset order, and the preset order is related to beam positions, so that the beam report may carry no beam positions or fewer beam positions, thereby reducing beam reporting overheads and ensuring that the network side can correctly decode the beam report.

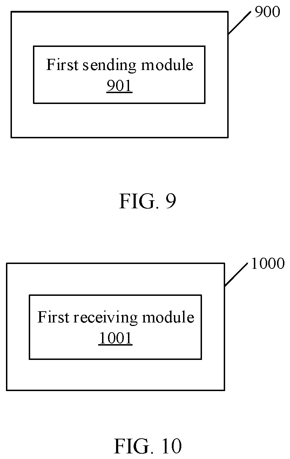

Referring to FIG. 9, an embodiment of this application provides a transmission apparatus, applied to a terminal, and the apparatus 900 includes:
a first sending module 901, configured to send a beam report, where the beam report includes beam quality information arranged in a preset order, and the preset order is related to beam positions.

In an implementation of this application, in a case that the beam report includes beam quality information of all beam positions, the beam report does not include beam positions;
or,
in a case that the beam report includes beam quality information of part of beam positions, the beam report further includes first position indication information indicating a first position, where the first position is a position whose beam quality information does not need to be fed back in the beam report;
   or,
in a case that the beam report includes beam quality information of part of beam positions, the beam report further includes second position indication information indicating a second position and type indication information indicating a type of the second position, where the type indication information is used to indicate that the second position is a position whose beam quality information does not need to be fed back, or the type indication information is used to indicate that the second position is a position whose beam quality information needs to be fed back;
   or,
in a case that the beam report includes beam quality information of part of beam positions, the beam report further includes third position indication information indicating part of beam positions, where the third position indication information is a bitmap, and a bit order of the bitmap is consistent with at least one of the following: reference signal resource set, reference signal resource, and beam information pattern; where the reference signal resource set and the reference signal resource are resources that are associated with the beam report and used for beam measurement, and the beam information pattern is used for determining a beam position that is associated with the beam report and used for beam measurement.

In an implementation of this application, the beam position includes at least one of the following:
a beam resource identifier;
a beam index;
a beam resource index;
a beam resource time-domain position;
a beam time-domain position; and
a beam angle.

In an implementation of this application, a sending manner of the beam report is determined in at least one of the following manners: being specified by a protocol, being configured by a network side, being reported by the terminal, and being negotiated between the terminal and the network side.

In an implementation of this application, the beam report includes sending indication information, and the sending indication information is used to indicate a sending manner of the beam report.

In an implementation of this application, the number of bits occupied by the sending indication information is determined based on the number of preset sending manners of the beam report, and the number of preset sending manners is determined in at least one of the following manners: being specified by a protocol, being configured by a network side, being reported by the terminal, and being negotiated between the terminal and the network side.

In an implementation of this application, the first position indication information meets at least one of the following:
the number of pieces of first position indication information is equal to the number of pieces of or a sum of the number of pieces of beam quality information that does not need to be fed back in the beam quality information of all the beam positions associated with the beam report; and
the number of bits occupied by the first position indication information is determined based on the number of pieces of beam quality information of all the beam positions associated with the beam report.

In an implementation of this application, in a case that the number of bits corresponding to the number of pieces of beam quality information of all the beam positions associated with the beam report is greater than or equal to the number of quantized bits or differentially quantized bits of beam quality information, the beam report includes the beam quality information of all the beam positions associated with the beam report, and the beam report does not include the first position indication information.

In an implementation of this application, in a case that the type indication information is used to indicate that a position indicated by the second position indication information is a position whose beam quality information does not need to be fed back, the second position indication information meets at least one of the following:
the number of pieces of second position indication information is equal to the number of pieces of beam quality information that does not need to be fed back in the beam quality information of all the beam positions associated with the beam report;
the number of pieces of second position indication information is equal to a sum of the number of pieces of beam quality information that does not need to be fed back in beam quality information of all beam positions corresponding to all feedback moments included in the beam report; and
the number of bits occupied by the second position indication information is determined based on the number of pieces of beam quality information of all the beam positions.

In an implementation of this application, the number of bits occupied by the first position indication information or the second position indication information is equal to rounding up (log₂(the number of pieces of beam quality information of all the beam positions associated with the beam report));
or,
the number of bits occupied by the first position indication information or the second position indication information is equal to rounding up (log₂(the number of pieces of beam quality information of all the beam positions associated with the beam report - the number of indicated beam quality information that does not need to be fed back)).

In an implementation of this application, in a case that the type indication information is used to indicate that a position indicated by the second position indication information is a position whose beam quality information needs to be fed back, the second position indication information meets at least one of the following:
the number of pieces of second position indication information is equal to the number of pieces of or a sum of the number of pieces of beam quality information that needs to be fed back in the beam quality information of all the beam positions associated with the beam report; and
the number of bits occupied by the second position indication information is determined based on the number or a sum of the number of enabled beam positions in all the beam positions associated with the beam report; and
the number of bits occupied by the second position indication information is determined based on the number of pieces of beam quality information of all the beam positions associated with the beam report.

In an implementation of this application, the number of bits occupied by the second position indication information being determined based on the number of pieces of beam quality information of all the beam positions associated with the beam report includes:
the number of bits occupied by the second position indication information is equal to rounding up (log₂(the number of pieces of beam quality information of all the beam positions associated with the beam report));
   or,
the number of bits occupied by the second position indication information is equal to rounding up (log₂(the number of pieces of beam quality information of all the beam positions associated with the beam report - the number of indicated beam quality information that needs to be fed back)).

In an implementation of this application, the apparatus further includes:
a first obtaining module, configured to obtain a manner of determining the number of bits occupied by the first position indication information or the second position indication information, in at least one of the following manners: being specified by a protocol, being configured by a network side, being reported by the terminal, and being negotiated between the terminal and the network side.

In an implementation of this application, the beam report further includes:
first information, where the first information indicates a manner of determining the number of bits occupied by the first position indication information or the second position indication information.

In an implementation of this application, in a case that the beam report includes a plurality of pieces of first position indication information or a plurality of pieces of second position indication information, encoding positions of the plurality of pieces of first position indication information or the plurality of pieces of second position indication information are adjacent in the beam report.

In an implementation of this application, an encoding position of the first position indication information or the second position indication information in the beam report is before an encoding position of beam quality information,

In an implementation of this application, the number of bits occupied by the bitmap is determined based on the number of pieces of beam quality information of all beam positions associated with the beam report.

In an implementation of this application, beam quality information of all beam positions included in or associated with the beam report is determined based on a reference signal resource set and/or reference signal resource that is associated with the beam report and used for beam measurement; or the beam quality information of all the beam positions included in or associated with the beam report is determined based on a pre-configured beam position resource pool.

In an implementation of this application, the number of pieces of beam quality information of all the beam positions included in or associated with the beam report is determined based on a reference signal resource set and/or reference signal resource that is associated with the beam report and used for beam measurement; or
the number of pieces of beam quality information of all the beam positions included in or associated with the beam report is determined based on the number of beam position resources that are associated with the beam report and used for beam measurement.

In an implementation of this application, the preset order of the beam quality information is consistent with an order of reference signal resource sets and/or reference signal resources associated with and/or enabled in configuration information of the beam report, and the reference signal resource set and/or reference signal resource is used for obtaining beam quality information of all the beam positions included in or associated with the beam report.

In an implementation of this application, the order of the reference signal resource sets or reference signal resources is determined based on a first order; where
the first order includes at least one of the following:
an identifier ID order of the reference signal resource sets;
a beam ID order associated with the reference signal resource sets;
a beam index order associated with the reference signal resource sets;
a beam angle order associated with the reference signal resource sets;
an ID order of the reference signal resources;
a beam ID order associated with the reference signal resources;
a beam index order associated with the reference signal resources;
a beam angle order associated with the reference signal resources;
a position order of the reference signal resource sets in the configuration information of the beam report;
a position order of the reference signal resources in the configuration information of the beam report;
a sending and/or reception time order of the reference signal resources; and
a priority order of reference signals.

In an implementation of this application, in a case that the first order includes a plurality of different orders, priorities of the different orders in the first order are determined in at least one of the following manners: being specified by a protocol, being configured by the network side, being reported by the terminal, and being negotiated between the terminal and the network side.

In an implementation of this application, the preset order of the beam quality information is consistent with an order of beam information patterns.

In an implementation of this application, the order of beam information patterns is determined in at least one of the following manners: being specified by a protocol, being configured by the network side, being reported by the terminal, and being negotiated between the terminal and the network side.

In an implementation of this application, the beam report further includes or is associated with an index of the beam information pattern selected by the terminal, and/or the beam report further includes the number of pieces of beam quality information that needs to be fed back.

In an implementation of this application, the beam report further includes second information, and the second information is used to indicate the number of pieces of beam quality information and/or the number of beam positions in the beam report.

In an implementation of this application, configuration information of the beam report or the beam report further includes third information, and the third information is used to indicate the number of periods of the beam quality information comprised in the beam report or the number of moments of the beam quality information included in the beam report.

In an implementation of this application, the number of second information is the same as the number of periods or moments indicated by the third information.

In an implementation of this application, beam quality information of all beam positions associated with the beam report or the number of pieces of beam quality information that needs to be fed back is determined based on the beam information pattern reported in or associated with the beam report.

In an implementation of this application, the number of pieces of beam quality information that needs to be fed back is determined based on the number of multiple panels (panels) simultaneously received by the terminal, or based on the number of beams simultaneously received by the terminal, or based on the number of beam groups, and the number of beam groups is determined by a group beam reporting function.

In an implementation of this application, the number of pieces of beam quality information that needs to be fed back is equal to a product of the number of pieces of beam quality information that needs to be fed back and corresponds to a single panel and the number of panels simultaneously received, or the number of pieces of beam quality information that needs to be fed back is equal to a product of the number of pieces of beam quality information that needs to be fed back and corresponds to a single receive beam and the number of receive beams simultaneously received.

In an implementation of this application, the preset order of the beam quality information is determined based on a panel feedback manner or a beam feedback manner.

In an implementation of this application, the panel feedback manner includes at least one of multi-panel priority and single-panel priority, or the beam feedback manner includes at least one of multi-beam priority and single-beam priority.

In an implementation of this application, in a case that the beam quality information uses a differential quantization method, reference beam quality information in the differential quantization method is determined in at least one of the following manners: being specified by a protocol, being configured by a network side, being reported by the terminal, and being negotiated between the terminal and the network side.

In an implementation of this application, in a case that reference beam quality information is included in beam quality information of all beam positions included in or associated with the beam report, the beam report includes or is associated with reference beam information position indication information, where the reference beam information position indication information is used to indicate a position of the reference beam quality information in the beam quality information of all the beam positions associated with the beam report.

In an implementation of this application, the reference beam information position indication information meets at least one of the following:
the number of bits occupied by the reference beam information position indication information is determined based on the number of pieces of beam quality information of all the beam positions associated with the beam report; and
the reference beam information position indication information is located before a position of the beam quality information in the beam report.

In an implementation of this application, in a case that the reference beam quality information is not included in the beam quality information of all the beam positions associated with the beam report, a position of the reference beam quality information in the beam report is determined in at least one of the following manners: being specified by the protocol, being configured by the network side, being reported by the terminal, and being negotiated between the terminal and the network side.

In an implementation of this application, the reference beam quality information is located before a position of the beam quality information position in the beam report.

The apparatus provided in this embodiment of this application can implement the processes implemented in the method embodiment in FIG. 7, with the same technical effects achieved. To avoid repetition, details are not described herein again.

Referring to FIG. 10, an embodiment of this application provides a transmission apparatus, applied to a network-side device, and the apparatus 1000 includes.
a first receiving module 1001, configured to receive a beam report, where the beam report includes beam quality information arranged in a preset order, and the preset order is related to beam positions.

In an implementation of this application, in a case that the beam report includes beam quality information of all beam positions, the beam report does not include beam positions;
or,
in a case that the beam report includes beam quality information of part of beam positions, the beam report further includes first position indication information indicating a first position, where the first position is a position whose beam quality information does not need to be fed back in the beam report;
   or,
in a case that the beam report includes beam quality information of part of beam positions, the beam report further includes or is associated with type indication information and second position indication information, where the type indication information is used to indicate that a position indicated by the second position indication information is a position whose beam quality information does not need to be fed back, or the type indication information is used to indicate that the position indicated by the second position indication information is a position whose beam quality information needs to be fed back;
   or,
in a case that the beam report includes beam quality information of part of beam positions, the beam report further includes third position indication information indicating part of beam positions, where the third position indication information is a bitmap, and a bit order of the bitmap is consistent with at least one of the following: reference signal resource set, reference signal resource, and beam information pattern; where the reference signal resource set and the reference signal resource are resources that are associated with the beam report and used for beam measurement, and the beam information pattern is used for determining a beam position that is associated with the beam report and used for beam measurement.

In an implementation of this application, the apparatus further includes:
a second determining module, configured to determine, according to the first position indication information or the second position indication information, the beam quality information that does not need to be fed back as a default value.

In an implementation of this application, the beam position includes at least one of the following:
a beam resource identifier;
a beam index;
a beam resource index;
a beam resource time-domain position;
a beam time-domain position; and
a beam angle.

In an implementation of this application, the first position indication information meets at least one of the following:
the number of pieces of first position indication information is equal to the number of pieces of or a sum of the number of pieces of beam quality information that does not need to be fed back in the beam quality information of all the beam positions associated with the beam report; and
the number of bits occupied by the first position indication information is determined based on the number of pieces of beam quality information of all the beam positions associated with the beam report.

In an implementation of this application, in a case that the number of bits corresponding to the number of pieces of beam quality information of all the beam positions associated with the beam report is greater than or equal to the number of quantized bits or differentially quantized bits of beam quality information, the beam report includes the beam quality information of all the beam positions, and the beam report does not include the first position indication information.

In an implementation of this application, in a case that the type indication information is used to indicate that the second position is a position whose beam quality information does not need to be fed back, the second position indication information meets at least one of the following:
the number of pieces of second position indication information is equal to the number of pieces of beam quality information that does not need to be fed back in the beam quality information of all the beam positions associated with the beam report;
the number of pieces of second position indication information is equal to a sum of the number of pieces of beam quality information that does not need to be fed back in beam quality information of all beam positions corresponding to all feedback moments included in the beam report; and
the number of bits occupied by the second position indication information is determined based on the number of pieces of beam quality information of all the beam positions associated with the beam report.

In an implementation of this application, the number of bits occupied by the first position indication information or the second position indication information is equal to rounding up (log₂(the number of pieces of beam quality information of all the beam positions associated with the beam report));
or,
the number of bits occupied by the first position indication information or the second position indication information is equal to rounding up (log₂(the number of pieces of beam quality information of all the beam positions associated with the beam report - the number of indicated beam quality information that does not need to be fed back)).

In an implementation of this application, in a case that the type indication information is used to indicate that the second position is a position whose beam quality information needs to be fed back, the second position indication information meets at least one of the following:
the number of pieces of second position indication information is equal to the number of pieces of or a sum of the number of pieces of beam quality information that needs to be fed back in the beam quality information of all the beam positions associated with the beam report; and
the number of bits occupied by the second position indication information is determined based on the number or a sum of the number of enabled beam positions in all the beam positions associated with the beam report; and
the number of bits occupied by the second position indication information is determined based on the number of pieces of beam quality information of all the beam positions associated with the beam report.

In an implementation of this application, the number of bits occupied by the second position indication information being determined based on the number of pieces of beam quality information of all the beam positions associated with the beam report includes:
the number of bits occupied by the second position indication information is equal to rounding up (log₂(the number of pieces of beam quality information of all the beam positions associated with the beam report));
   or,
the number of bits occupied by the second position indication information is equal to rounding up (log₂(the number of pieces of beam quality information of all the beam positions associated with the beam report - the number of indicated beam quality information that needs to be fed back)).

In an implementation of this application, the beam report further includes:
first information, where the first information indicates a manner of determining the number of bits occupied by the first position indication information or the second position indication information.

In an implementation of this application, in a case that the beam report includes a plurality of pieces of first position indication information or a plurality of pieces of second position indication information, encoding positions of the plurality of pieces of first position indication information or second position indication information are adjacent in the beam report.

In an implementation of this application, an encoding position of the first position indication information or the second position indication information in the beam report is before an encoding position of beam quality information,

In an implementation of this application, the number of bits occupied by the bitmap is determined based on the number of pieces of beam quality information of all beam positions associated with the beam report.

In an implementation of this application, beam quality information of all beam positions included in or associated with the beam report is determined based on a reference signal resource set and/or reference signal resource that is associated with the beam report and used for beam measurement; or the beam quality information of all the beam positions included in or associated with the beam report is determined based on a pre-configured beam position resource pool.

In an implementation of this application, the number of pieces of beam quality information of all the beam positions included in or associated with the beam report is determined based on a reference signal resource set and/or reference signal resource that is associated with the beam report and used for beam measurement; or
the number of pieces of beam quality information of all the beam positions included in or associated with the beam report is determined based on the number of beam position resources that are associated with the beam report and used for beam measurement.

In an implementation of this application, the preset order of the beam quality information is consistent with an order of reference signal resource sets and/or reference signal resources associated with and/or enabled in configuration information of the beam report, and the reference signal resource set and/or reference signal resource is used for obtaining beam quality information of all the beam positions included in or associated with the beam report.

In an implementation of this application, the order of the reference signal resource sets or reference signal resources is determined based on a first order; where
the first order includes at least one of the following:
an ID order of the reference signal resource sets;
a beam ID order associated with the reference signal resource sets;
a beam index order associated with the reference signal resource sets;
a beam angle order associated with the reference signal resource sets;
an ID order of the reference signal resources;
a beam ID order associated with the reference signal resources;
a beam index order associated with the reference signal resources;
a beam angle order associated with the reference signal resources;
a position order of the reference signal resource sets in the configuration information of the beam report;
a position order of the reference signal resources in the configuration information of the beam report;
a sending and/or reception time order of the reference signal resources; and
a priority order of reference signals.

In an implementation of this application, the preset order of the beam quality information is consistent with an order of beam information patterns.

In an implementation of this application, the beam report further includes or is associated with an index of the beam information pattern selected by the terminal, and/or the beam report further includes the number of pieces of beam quality information that needs to be fed back.

In an implementation of this application, the beam report further includes second information, and the second information is used to indicate the number of pieces of beam quality information and/or the number of beam positions in the beam report.

In an implementation of this application, configuration information of the beam report or the beam report further includes third information, and the third information is used to indicate the number of periods of the beam quality information comprised in the beam report or the number of moments of the beam quality information included in the beam report.

In an implementation of this application, the number of second information is the same as the number of periods or moments indicated by the third information.

In an implementation of this application, beam quality information of all beam positions associated with the beam report or the number of pieces of beam quality information that needs to be fed back is determined based on the beam information pattern reported in or associated with the beam report.

In an implementation of this application, the number of pieces of beam quality information that needs to be fed back is determined based on the number of panels (panels) simultaneously received by the terminal, or based on the number of beams simultaneously received by the terminal, or based on the number of beam groups, and the number of beam groups is determined by a group beam reporting function (groupBasedBeamReport).

In an implementation of this application, the number of pieces of beam quality information that needs to be fed back is equal to a product of the number of pieces of beam quality information that needs to be fed back and corresponds to a single panel and the number of panels simultaneously received, or the number of pieces of beam quality information that needs to be fed back is equal to a product of the number of pieces of beam quality information that needs to be fed back and corresponds to a single receive beam and the number of receive beams simultaneously received.

In an implementation of this application, the preset order of the beam quality information is determined based on a panel feedback manner or a beam feedback manner.

In an implementation of this application, the panel feedback manner includes at least one of multi-panel priority and single-panel priority, or the beam feedback manner includes at least one of multi-beam priority and single-beam priority.

In an implementation of this application, in a case that the beam quality information uses a differential quantization method, reference beam quality information in the differential quantization method is determined in at least one of the following manners: being specified by a protocol, being configured by a network side, being reported by the terminal, and being negotiated between the terminal and the network side.

In an implementation of this application, in a case that reference beam quality information is included in beam quality information of all beam positions included in or associated with the beam report, the beam report includes or is associated with reference beam information position indication information, where the reference beam information position indication information is used to indicate a position of the reference beam quality information in the beam quality information of all the beam positions associated with the beam report.

In an implementation of this application, the reference beam information position indication information meets at least one of the following:
the number of bits occupied by the reference beam information position indication information is determined based on the number of pieces of beam quality information of all the beam positions associated with the beam report; and
the reference beam information position indication information is located before a position of the beam quality information in the beam report.

In an implementation of this application, in a case that the reference beam quality information is not included in the beam quality information of all the beam positions associated with the beam report, a position of the reference beam quality information in the beam report is determined in at least one of the following manners: being specified by the protocol, being configured by the network side, being reported by the terminal, and being negotiated between the terminal and the network side.

In an implementation of this application, the reference beam quality information is located before a position of the beam quality information position in the beam report.

The apparatus provided in this embodiment of this application can implement the processes implemented in the method embodiment in FIG. 8, with the same technical effects achieved. To avoid repetition, details are not described herein again.

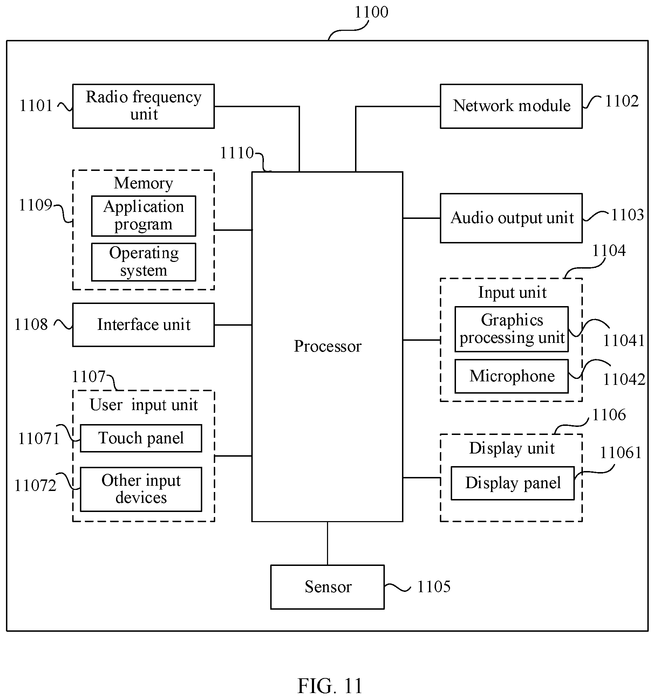

FIG. 11 is a schematic diagram of a hardware structure of a terminal implementing an embodiment of this application. The terminal 1100 includes but is not limited to at least part of components such as a radio frequency unit 1101, a network module 1102, an audio output unit 1103, an input unit 1104, a sensor 1105, a display unit 1106, a user input unit 1107, an interface unit 1108, a memory 1109, and a processor 1110.

A person skilled in the art can understand that the terminal 1100 may further include a power supply (such as a battery) for supplying power to the components. The power supply may be logically connected to the processor 1110 through a power management system. In this way, functions such as charge management, discharge management, and power consumption management are implemented by using the power management system. The terminal structure shown in FIG. 11 does not constitute a limitation to the terminal. The terminal may include more or fewer components than those shown in the figure, or some components may be combined, or there may be a different component arrangement, which is not repeated herein.

It can be understood that in this embodiment of this application, the input unit 1104 may include a graphics processing unit (Graphics Processing Unit, GPU) 11041 and a microphone 11042. The graphics processing unit 11041 processes image data of a still picture or video obtained by an image capture apparatus (such as a camera) in a video capture mode or an image capture mode. The display unit 1106 may include a display panel 11061, and the display panel 11061 may be configured in a form of a liquid crystal display, an organic light-emitting diode, and the like. The user input unit 1107 includes at least one of a touch panel 11071 and other input devices 11072. The touch panel 11071 is also referred to as a touchscreen. The touch panel 11071 may include two parts: a touch detection apparatus and a touch controller. The other input devices 11072 may include but are not limited to a physical keyboard, a function key (such as a volume control key or a power on/off key), a trackball, a mouse, a joystick, and the like. Details are not described herein.

In this embodiment of this application, after receiving downlink data from a network-side device, the radio frequency unit 1101 sends the downlink data to the processor 1110 for processing; and the radio frequency unit 1101 also sends uplink data to the network-side device. Generally, the radio frequency unit 1101 includes, but is not limited to, an antenna, an amplifier, a transceiver, a coupler, a low noise amplifier, a duplexer, and the like.

The memory 1109 may be configured to store software programs or instructions and various data. The memory 1109 may mainly include a first storage area for storing programs or instructions and a second storage area for storing data, where the first storage area may store an operating system, an application program or instructions required by at least one function (for example, an audio playing function and an image playing function), and the like. In addition, the memory 1109 may be a volatile memory or a non-volatile memory, or the memory 1109 may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct memory bus random access memory (Direct Rambus RAM, DRRAM). The memory 1109 described in this embodiment this application includes but is not limited to these and any other suitable types of memories.

The processor 1110 may include one or more processing units. Optionally, the processor 1110 integrates an application processor and a modem processor. The application processor mainly processes operations related to an operating system, a user interface, an application program, and the like. The modem processor mainly processes wireless communication signals, for example, a baseband processor. It should be understood that alternatively, the modem processor may not be integrated into the processor 1110.

The terminal provided by the embodiments of this application can realize the processes realized in the method embodiment of FIG. 7 with the same technical effects achieved. To avoid repetition, details are not described herein again.

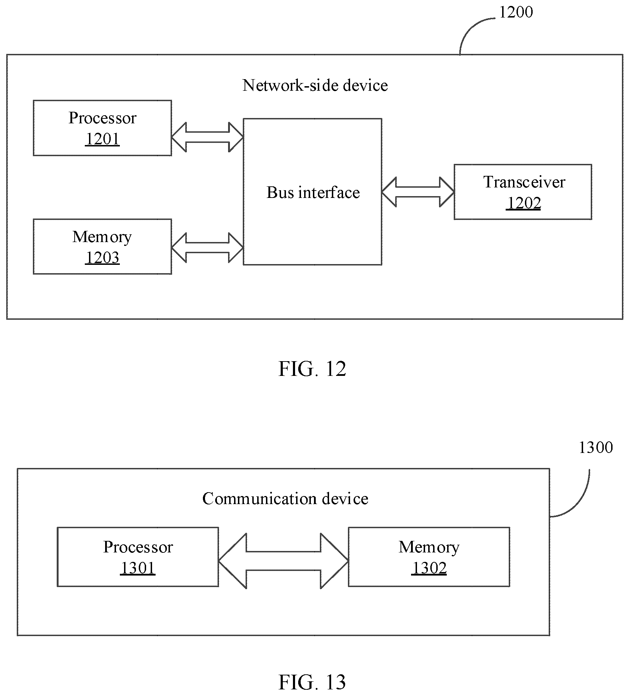

Referring to FIG. 12, FIG. 12 is a structural diagram of a network-side device to which the embodiments of the present invention are applied. As shown in FIG. 12, the network-side device 1200 includes a processor 1201, a transceiver 1202, a memory 1203, and a bus interface. The processor 1201 may be responsible for managing a bus architecture and general processing. The memory 1203 may store data that the processor 1201 uses when performing an operation.

In an embodiment of the present invention, the network-side device 1200 further includes a program stored in the memory 1203 and capable of running on the processor 1201. When the program is executed by the processor 1201, the steps of the foregoing method shown in FIG. 8 are implemented.

In FIG. 12, a bus architecture may include any quantity of interconnected buses and bridges, specifically for interconnecting various circuits of one or more processors represented by the processor 1201 and a memory represented by the memory 1203. The bus architecture may further interconnect various other circuits such as a peripheral device, a voltage regulator, and a power management circuit. These are all well known in the art, and therefore are not further described in this specification. The bus interface provides an interface. The transceiver 1202 may be a plurality of components, that is, including a transmitter and a receiver, and provides a unit for communicating with various other apparatuses on a transmission medium.

Optionally, as shown in FIG. 13, an embodiment of this application further provides a communication device 1300, including a processor 1301 and a memory 1302. The memory 1302 stores a program or instructions capable of running on the processor 1301. For example, when the communication device 1300 is a terminal, the program or the instructions are executed by the processor 1301 to implement the steps of the corresponding method embodiment in FIG. 7; when the communication device 1300 is a network-side device, the program or the instructions are executed by the processor 1301 to implement the steps of the corresponding method embodiment in FIG. 8, with the same technical effects achieved. To avoid repetition, details are not described herein again.

An embodiment of this application further provides a readable storage medium, where the readable storage medium stores a program or instructions, and when the program or the instructions are executed by a processor, the processes of the foregoing embodiments of the method in FIG. 7 or FIG. 8 are implemented, with the same technical effects achieved. To avoid repetition, details are not described herein again.

The processor is a processor in the terminal described in the foregoing embodiments. The readable storage medium includes a computer-readable storage medium, for example, a computer read only memory ROM, a random access memory RAM, a magnetic disk, or an optical disc.

An embodiment of this application further provides a chip. The chip includes a processor and a communication interface. The communication interface is coupled to the processor. The processor is configured to run a program or instructions to implement the processes as shown in FIG. 7 or FIG. 8 and in the foregoing method embodiments, with the same technical effect achieved. To avoid repetition, details are not described herein again.

It should be understood that the chip mentioned in this embodiment of this application may also be referred to as a system-on-chip, a system chip, a system-on-a-chip, or a system on a chip, or the like.

An embodiment of this application further provides a computer program/program product, where the computer program/program product is stored in a storage medium, and when being executed by at least one processor, the computer program/program product is configured to implement the processes as shown in FIG. 7 or FIG. 8 and in the foregoing method embodiments, with the same technical effects achieved. To avoid repetition, details are not repeated herein.

An embodiment of this application further provides a communication system, where the communication system includes a terminal and a network-side device. The terminal is configured to execute the processes as shown in FIG. 7 and the foregoing method embodiments, and the network-side device is configured to execute the processes as shown in FIG. 8 and the foregoing method embodiments, with the same technical effects achieved. To avoid repetition, details are not repeated herein.

It should be noted that in this specification, the terms "include" and "comprise", or any of their variants are intended to cover a non-exclusive inclusion, such that a process, method, article, or apparatus that includes a list of elements not only includes those elements but further includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, persons skilled in the art may clearly understand that the method in the foregoing embodiment may be implemented by software with a necessary general hardware platform. Certainly, the method in the foregoing embodiment may also be implemented by hardware. However, in many cases, the former is a preferred implementation. Based on such an understanding, the technical solutions of this application essentially or the part contributing to the related art may be implemented in a form of a computer software product. The computer software product may be stored in a storage medium (for example, a ROM/RAM, a magnetic disk, or an optical disc), and includes several instructions for instructing a terminal device (which may be a mobile phone, a computer, a server, an air conditioner, a network device, or the like) to perform the method described in each embodiment of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A transmission method, comprising:
sending, by a terminal, a beam report, wherein the beam report comprises beam quality information arranged in a preset order, and the preset order is related to beam positions.

2. The method according to claim 1, wherein
in a case that the beam report comprises beam quality information of all beam positions, the beam report does not comprise beam positions;
or,
in a case that the beam report comprises beam quality information of part of beam positions, the beam report further comprises first position indication information indicating a first position, wherein the first position is a position whose beam quality information does not need to be fed back in the beam report;
or,
in a case that the beam report comprises beam quality information of part of beam positions, the beam report further comprises second position indication information indicating a second position and type indication information indicating a type of the second position, wherein the type indication information is used to indicate that the second position is a position whose beam quality information does not need to be fed back, or the type indication information is used to indicate that the second position is a position whose beam quality information needs to be fed back;
or,
in a case that the beam report comprises beam quality information of part of beam positions, the beam report further comprises third position indication information indicating part of beam positions, wherein the third position indication information is a bitmap, and a bit order of the bitmap is consistent with at least one of the following: reference signal resource set, reference signal resource, and beam information pattern; wherein the reference signal resource set and the reference signal resource are resources that are associated with the beam report and used for beam measurement, and the beam information pattern is used for determining a beam position that is associated with the beam report and used for beam measurement.

3. The method according to claim 1 or 2, wherein the beam position comprises at least one of the following:
a beam resource identifier;
a beam index;
a beam resource index;
a beam resource time-domain position;
a beam time-domain position; and
a beam angle.

4. The method according to claim 1, wherein the beam report comprises sending indication information, and the sending indication information is used to indicate a sending manner of the beam report, wherein the number of bits occupied by the sending indication information is determined based on the number of preset sending manners of the beam report, and the number of preset sending manners is determined in at least one of the following manners: being specified by a protocol, being configured by a network side, being reported by the terminal, and being negotiated between the terminal and the network side.

5. The method according to claim 2, wherein the first position indication information meets at least one of the following:
the number of pieces of first position indication information is equal to the number of pieces of or a sum of the number of pieces of beam quality information that does not need to be fed back in the beam quality information of all the beam positions associated with the beam report; and
the number of bits occupied by the first position indication information is determined based on the number or a sum of the number of pieces of beam quality information of all the beam positions associated with the beam report.

6. The method according to claim 2, wherein in a case that the number of bits corresponding to the number of pieces of beam quality information of all the beam positions associated with the beam report is greater than or equal to the number of quantized bits or differentially quantized bits of beam quality information, the beam report comprises the beam quality information of all the beam positions, and the beam report does not comprise the first position indication information.

7. The method according to claim 2, wherein in a case that the type indication information is used to indicate that the second position is a position whose beam quality information does not need to be fed back, the second position indication information meets at least one of the following:
the number of pieces of second position indication information is equal to the number of pieces of beam quality information that does not need to be fed back in the beam quality information of all the beam positions associated with the beam report;
the number of pieces of second position indication information is equal to a sum of the number of pieces of beam quality information that does not need to be fed back in beam quality information of all beam positions corresponding to all feedback moments comprised in the beam report; and
the number of bits occupied by the second position indication information is determined based on the number of pieces of beam quality information of all the beam positions associated with the beam report;
or,
in a case that the type indication information is used to indicate that the second position is a position whose beam quality information needs to be fed back, the second position indication information meets at least one of the following:
the number of pieces of second position indication information is equal to the number of pieces of or a sum of the number of pieces of beam quality information that needs to be fed back in the beam quality information of all the beam positions associated with the beam report;
the number of bits occupied by the second position indication information is determined based on the number or a sum of the number of enabled beam positions in all the beam positions associated with the beam report; and
the number of bits occupied by the second position indication information is determined based on the number of pieces of beam quality information of all the beam positions associated with the beam report.

8. The method according to claim 5, wherein
the number of bits occupied by the first position indication information is equal to rounding up (log₂(the number of pieces of beam quality information of all the beam positions associated with the beam report));
or,
the number of bits occupied by the first position indication information is equal to rounding up (log₂(a difference between the number of pieces of beam quality information of all the beam positions associated with the beam report and the number of indicated beam quality information that does not need to be fed back)).

9. The method according to claim 7, wherein
the number of bits occupied by the second position indication information is equal to rounding up (log₂(the number of pieces of beam quality information of all the beam positions associated with the beam report));
or,
the number of bits occupied by the second position indication information is equal to rounding up (log₂(a difference between the number of pieces of beam quality information of all the beam positions associated with the beam report and the number of indicated beam quality information that needs to be fed back)).

10. The method according to claim 1, wherein the beam report further comprises:
first information, wherein the first information indicates a manner of determining the number of bits occupied by the first position indication information or the second position indication information.

11. The method according to claim 2, 5, or 7, wherein in a case that the beam report comprises a plurality of pieces of first position indication information or a plurality of pieces of second position indication information, encoding positions of the plurality of pieces of first position indication information or the plurality of pieces of second position indication information are adjacent in the beam report.

12. The method according to claim 2 or 11, wherein an encoding position of the first position indication information or the second position indication information in the beam report is before an encoding position of beam quality information.

13. The method according to claim 2, wherein the number of bits occupied by the bitmap is determined by the number of pieces of beam quality information of all the beam positions associated with the beam report.

14. The method according to claim 1 or 2, wherein beam quality information of all beam positions comprised in or associated with the beam report is determined based on a reference signal resource set and/or reference signal resource that is associated with the beam report and used for beam measurement;
or,
the beam quality information of all the beam positions comprised in or associated with the beam report is determined based on a pre-configured beam position resource pool;
or,
the number of pieces of beam quality information of all the beam positions comprised in or associated with the beam report is determined based on a reference signal resource set and/or reference signal resource that is associated with the beam report and used for beam measurement;
or,
the number of pieces of beam quality information of all the beam positions comprised in or associated with the beam report is determined based on the number of beam position resources that are associated with the beam report and used for beam measurement.

15. The method according to claim 1, wherein the preset order of the beam quality information is consistent with an order of reference signal resource sets and/or reference signal resources associated with and/or enabled in configuration information of the beam report, and the reference signal resource set and/or reference signal resource is used for obtaining beam quality information of all beam positions associated with the beam report; wherein
the order of the reference signal resource sets or reference signal resources is determined based on a first order; wherein
the first order comprises at least one of the following:
an identifier ID order of the reference signal resource sets;
a beam ID order associated with the reference signal resource sets;
a beam index order associated with the reference signal resource sets;
a beam angle order associated with the reference signal resource sets;
an ID order of the reference signal resources;
a beam ID order associated with the reference signal resources;
a beam index order associated with the reference signal resources;
a beam angle order associated with the reference signal resources;
a position order of the reference signal resource sets in the configuration information of the beam report;
a position order of the reference signal resources in the configuration information of the beam report;
a sending and/or reception time order of the reference signal resources; and
a priority order of reference signals.

16. The method according to claim 1, wherein the preset order of the beam quality information is consistent with an order of beam information patterns.

17. The method according to claim 1, wherein the beam report further comprises or is associated with an index of a beam information pattern selected by the terminal.

18. The method according to claim 1, 2, or 17, wherein the beam report further comprises second information, and the second information is used to indicate the number of pieces of beam quality information and/or the number of beam positions in the beam report.

19. The method according to claim 1, 2, 17, or 18, wherein configuration information of the beam report or the beam report further comprises third information, and the third information is used to indicate the number of periods of the beam quality information comprised in the beam report or the number of moments of the beam quality information comprised in the beam report.

20. The method according to claim 19, wherein the number of second information is the same as the number of periods or moments indicated by the third information.

21. The method according to claim 17, wherein beam quality information of all beam positions associated with the beam report or the number of pieces of beam quality information that needs to be fed back is determined based on the beam information pattern reported in or associated with the beam report.

22. The method according to claim 1, wherein the number of pieces of beam quality information that needs to be fed back is determined based on the number of panels (panels) simultaneously received by the terminal, or based on the number of beams simultaneously received by the terminal, or based on the number of beam groups, and the number of beam groups is determined by a group beam reporting function.

23. The method according to claim 22, wherein the number of pieces of beam quality information that needs to be fed back is equal to a product of the number of pieces of beam quality information that needs to be fed back and corresponds to a single panel and the number of panels simultaneously received, or the number of pieces of beam quality information that needs to be fed back is equal to a product of the number of pieces of beam quality information that needs to be fed back and corresponds to a single receive beam and the number of receive beams simultaneously received.

24. The method according to claim 1, wherein the preset order of the beam quality information is determined based on a panel feedback manner or a beam feedback manner; wherein
the panel feedback manner comprises at least one of multi-panel priority and single-panel priority, or the beam feedback manner comprises at least one of multibeam priority and single-beam priority.

25. The method according to claim 1, wherein in a case that the beam quality information uses a differential quantization method, reference beam quality information in the differential quantization method is determined in at least one of the following manners: being specified by a protocol, being configured by a network side, being reported by the terminal, and being negotiated between the terminal and the network side.

26. The method according to claim 25, wherein in a case that reference beam quality information is comprised in beam quality information of all beam positions comprised in or associated with the beam report, the beam report comprises or is associated with reference beam information position indication information, wherein the reference beam information position indication information is used to indicate a position of the reference beam quality information in the beam quality information of all the beam positions.

27. The method according to claim 26, wherein the reference beam information position indication information meets at least one of the following:
the number of bits occupied by the reference beam information position indication information is determined based on the number of pieces of beam quality information of all the beam positions; and
the reference beam information position indication information is located before a position of the beam quality information in the beam report.

28. The method according to claim 26, wherein in a case that the reference beam quality information is not comprised in the beam quality information of all the beam positions, a position of the reference beam quality information in the beam report is determined in at least one of the following manners: being specified by the protocol, being configured by the network side, being reported by the terminal, and being negotiated between the terminal and the network side.

29. The method according to claim 28, wherein the reference beam quality information is located before a position of the beam quality information position in the beam report.

30. A transmission method, comprising:
receiving, by a network-side device, a beam report, wherein the beam report comprises beam quality information arranged in a preset order, and the preset order is related to beam positions.

31. The method according to claim 30, wherein
in a case that the beam report comprises beam quality information of all beam positions, the beam report does not comprise beam positions;
or,
in a case that the beam report comprises beam quality information of part of beam positions, the beam report further comprises first position indication information indicating a first position, wherein the first position is a position whose beam quality information does not need to be fed back in the beam report;
or,
in a case that the beam report comprises beam quality information of part of beam positions, the beam report further comprises or is associated with type indication information and second position indication information, wherein the type indication information is used to indicate that a position indicated by the second position indication information is a position whose beam quality information does not need to be fed back, or the type indication information is used to indicate that the position indicated by the second position indication information is a position whose beam quality information needs to be fed back;
or,
in a case that the beam report comprises beam quality information of part of beam positions, the beam report further comprises third position indication information indicating part of beam positions, wherein the third position indication information is a bitmap, and a bit order of the bitmap is consistent with at least one of the following: reference signal resource set, reference signal resource, and beam information pattern; wherein the reference signal resource set and the reference signal resource are resources that are associated with the beam report and used for beam measurement, and the beam information pattern is used for determining a beam position that is associated with the beam report and used for beam measurement.

32. The method according to claim 31, wherein the method further comprises:
determining, by the network-side device according to the first position indication information or the second position indication information, the beam quality information that does not need to be fed back as a default value.

33. The method according to claim 30 or 31, wherein the beam position comprises at least one of the following:
a beam resource identifier;
a beam index;
a beam resource index;
a beam resource time-domain position;
a beam time-domain position; and
a beam angle.

34. A transmission apparatus, comprising:
a first sending module, configured to send a beam report, wherein the beam report comprises beam quality information arranged in a preset order, and the preset order is related to beam positions.

35. A transmission apparatus, comprising:
a first receiving module, configured to receive a beam report, wherein the beam report comprises beam quality information arranged in a preset order, and the preset order is related to beam positions.

36. A communication device, comprising a processor, a memory, and a program or instructions stored in the memory and capable of running on the processor, and when the program or the instructions are executed by the processor, the steps of the method according to any one of claims 1 to 29 or the steps of the method according to any one of claims 30 to 33 are implemented.

37. A readable storage medium, wherein the readable storage medium stores a program or instructions, and when the program or the instructions are executed by a processor, the steps of the method according to any one of claims 1 to 29 or the steps of the method according to any one of claims 30 to 33 are implemented.
